(19) Europäisches Patentamt
European Patent Office
Office européen des brevets

(11) **EP 2 529 359 B1**

## (12) EUROPÄISCHE PATENTSCHRIFT

(45) Veröffentlichungstag und Bekanntmachung des Hinweises auf die Patenterteilung:
**02.04.2014 Patentblatt 2014/14**

(21) Anmeldenummer: **11705142.5**

(22) Anmeldetag: **28.01.2011**

(51) Int Cl.:
***G07B 15/00*** (2011.01)

(86) Internationale Anmeldenummer:
**PCT/AT2011/000048**

(87) Internationale Veröffentlichungsnummer:
**WO 2011/091459 (04.08.2011 Gazette 2011/31)**

(54) **Verfahren zur authentifizierung von fahrzeuggeräten**

Method for DSRC communication

Procédé de communication DSRC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2010 EP 10450009**

(43) Veröffentlichungstag der Anmeldung:
**05.12.2012 Patentblatt 2012/49**

(73) Patentinhaber: **Kapsch TrafficCom AG 1120 Wien (AT)**

(72) Erfinder:
• **SCHRÖDL, Sören**
  **A-2340 Mödling (AT)**
• **NAGY, Oliver**
  **A-1190 Wien (AT)**

(74) Vertreter: **Weiser, Andreas Patentanwalt Kopfgasse 7 1130 Wien (AT)**

(56) Entgegenhaltungen:
**EP-A2- 0 769 763      WO-A1-01/59711
US-A1- 2007 223 702**

• YIXIN JIANG ET AL: "BAT: A robust signature scheme for vehicular networks using Binary Authentication Tree", IEEE TRANSACTIONS ON WIRELESS COMMUNICATIONS, IEEE SERVICE CENTER, PISCATAWAY, NJ, US, Bd. 6, Nr. 4, 1. April 2009 (2009-04-01), Seiten 1974-1983, XP011249007, ISSN: 1536-1276

**Beschreibung**

Die vorliegende Erfindung betrifft ein Verfahren zur Authentifizierung von Fahrzeuggeräten, die mit Baken eines Straßenmautsystems DSRC-Kommunikationen führen können, wobei die Baken über einen systemweiten Schlüssel und die Fahrzeuggeräte nur über individuelle Schlüssel verfügen, die jeweils aus dem systemweiten Schlüssel anhand einer fahrzeuggerätespezifischen Ableitungskennung gebildet sind, wobei die Ableitungskennung bei einer Kommunikation vom Fahrzeuggerät an die Bake gesendet wird, um der Bake die Nachbildung des individuellen Schlüssels für die Ver- bzw. Entschlüsselung der Kommunikation mit dem Fahrzeuggerät und/oder für den Zugriff auf im Fahrzeuggerät gespeicherte Daten zu ermöglichen.

Ein Verfahren zur DSRC-Kommunikation zwischen solchen Baken und Fahrzeuggeräten, wobei die Fahrzeuggeräte bei Kommunikationen mit aufeinanderfolgenden Baken wechselnde Ableitungskennungen senden, ist aus der früheren Europäischen Patentanmeldung Nr. 10 450 009.5 bekannt, deren Priorität hier in Anspruch genommen wird.

DSRC-Straßenmautsysteme (Dedicated Short Range Communication Toll Systems) sind beispielsweise in den Standards ISO 14906 und EN 15509 normiert; die DSRC-Kommunikation auf der Funkschnittstelle kann dabei z.B. nach dem WAVE-Standard IEEE 1609.11 erfolgen. Aus Sicherheitsgründen werden bei derartigen DSRC-Straßenmautsystemen systemweite Schlüssel (Master Keys) nicht in den Fahrzeuggeräten (Onboard Units, OBUs) gespeichert, sondern diese erhalten nur individuelle, davon abgeleitete Schlüssel (Derived Keys). Über die DSRC-Funkschnittstelle werden nur diese individuellen Schlüssel kommuniziert bzw. verwendet.

Die hierfür erforderliche Ableitungskennung, in den Standards ISO 14906 bzw. EN 15509 als "Key Diversifier" bezeichnet, stellt eine für jedes Fahrzeuggerät individuelle Kennung der jeweils verwendeten Regel für die Ableitung des individuellen Schlüssels (Derived Key) vom systemweiten Schlüssel (Master Key) dar. Die Ableitungskennung (Key Diversifier) wird nach dem Stand der Technik bei jeder Kommunikation zwischen einem Fahrzeuggerät und einer Bake vom Fahrzeuggerät der Bake bekanntgegeben, damit auch diese aus dem systemweiten Schlüssel "on the fly" den jeweiligen individuellen Schlüssel des Fahrzeuggeräts für die Kommunikation mit bzw. den Zugriff zu dem Fahrzeuggerät ableiten kann.

Die in der früheren Anmeldung Nr. 10 450 009.5 beschriebene Erfindung beruhte auf der Erkenntnis, daß diese Konstellation ein Datenschutzproblem in sich birgt: Da die - fahrzeuggerätespezifische - Ableitungskennung bei jeder DSRC-Funkkommunikation zunächst vom Fahrzeuggerät über die Funkschnittstelle ausgestrahlt wird, könnte durch Abhören der Funkschnittstelle oder ein gezieltes, betrügerisches Auslesen eines vorbeifahrenden Fahrzeuggeräts dieses jeweils identifiziert und damit sein Weg nachverfolgt werden. Damit könnte ein Bewegungsprofil eines bestimmten Fahrzeuggeräts bzw. seines Benutzers in einem Straßenmautsystem erstellt werden.

Die in der früheren Anmeldung Nr. 10 450 009.5 offenbarte Erfindung löste dieses Datenschutzproblem dadurch, daß die Fahrzeuggeräte bei Kommunikationen mit aufeinanderfolgenden Baken wechselnde Ableitungskennungen senden, indem in einem Fahrzeuggerät ein Vorrat von Paaren von individuellen Schlüsseln und zugehörigen Ableitungskennungen gespeichert wird und ein Fahrzeuggerät im Rahmen einer Kommunikation mit einer Bake ein Paar aus diesem Vorrat auswählt und dieses für die Kommunikation verwendet. Damit kann verhindert werden, daß Fahrzeuggeräte aufgrund der von ihnen in den DSRC-Kommunikationen ausgestrahlten Ableitungskennungen über einen längeren Zeitraum oder mehrere Bakenabschnitte hinweg verfolgt ("getrackt") werden.

Die vorliegende Erfindung beruht auf der Erkenntnis, daß die vorgenannte Funktionalität in vorteilhafter Weise auch zur Überprüfung der Echtheit, d.h. zur Authentifizierung eines Fahrzeuggeräts eingesetzt werden kann. Zu diesem Zweck wird gemäß der vorliegenden Erfindung vorgesehen,

dass in dem Fahrzeuggerät ein Vorrat an Paaren von individuellen Schlüsseln und zugehörigen Ableitungskennungen gespeichert wird und das Fahrzeuggerät bei aufeinanderfolgenden Kommunikationen jeweils ein anderes Paar aus dem Vorrat auswählt und für die jeweilige Kommunikation verwendet, und

dass zur Authentifizierung das Fahrzeuggerät von einem Abfragegerät zur Durchführung zumindest jenes Teils einer Funkkommunikation veranlasst wird, in welchem es die ausgewählte Ableitungskennung sendet, und diese im Abfragegerät empfangen und mit im Abfragegerät gespeicherten Ableitungskennungen des Vorrats verglichen wird, wobei ein Gleichheitsfall das Fahrzeuggerät authentifiziert.

Dadurch kann auf einfache Art und Weise die Echtheit eines Fahrzeuggeräts überprüft werden, ohne hierfür eine Verbindung mit einer Zentrale des Mautsystems zu benötigen: Der im Fahrzeuggerät gespeicherte Vorrat an Ableitungskennungen dringt im "normalen" Funkbetrieb mit den Baken nur jeweils einzeln über einen sehr großen Zeitraum und an geographisch verteilten Punkten, nämlich den verschiedenen Baken, an die Öffentlichkeit. Die Gefahr von Betrugsversuchen durch Abhören der Luftschnittstelle zwischen dem Fahrzeuggerät und den Baken, um diesen "geheimen" Vorrat herauszufinden und so z.B. gefälschte Fahrzeuggeräte mit "echten" Ableitungskennungen zu versehen, ist daher extrem gering. Mit dem erfindungsgemäßen Verfahren wird der geheim im Fahrzeuggerät enthaltene Vorrat an Ableitungskennungen abgefragt und kann so zur Validierung der Echtheit des Fahrzeuggeräts verwendet werden.

Für das erfindungsgemäße Authentifizierungsverfahren ist auch keinerlei Veränderung des Kommunikationsprotokolls zwischen den Fahrzeuggeräten und den Baken erforderlich, weil das Abfragegerät jenen Teil der Kommunikation mit einer Bake emuliert, in welchem die Ableitungskennungen vom Fahrzeuggerät ausgegeben werden. Das Abfragegerät kann dazu in beliebiger Weise ausgebildet werden, z.B. als transportables oder mobiles Gerät, insbesondere Handgerät, um die Echtheit eines Fahrzeuggeräts z.B. direkt vor Ort zu überprüfen.

Besonders vorteilhaft ist es, wenn das Fahrzeuggerät vom Abfragegerät zur Durchführung aufeinanderfolgender Kommunikationen veranlasst wird, um mehrere verschiedene Ableitungskennungen zu empfangen und mit im Abfragegerät gespeicherten Ableitungskennungen des Vorrats zu vergleichen, wobei das Fahrzeuggerät nur authentifiziert wird, wenn alle Vergleiche den Gleichheitsfall ergeben. Dadurch kann eine noch höhere Sicherheit der Authentifizierung (Validierung) des Fahrzeuggeräts erreicht werden.

Bevorzugt wird das genannte Paar im Fahrzeuggerät zufällig oder zumindest pseudo-zufällig aus dem Vorrat ausgewählt.

Als weitere Ausführungsform kann eine Teilmenge des im Fahrzeuggerät gespeicherten Vorrats von Ableitungskennungen nur für die genannten Kontrollzwecke verwendet werden. Somit werden diese Ableitungskennungen auch niemals an Baken übertragen und bleiben bis zum Kontrollzeitpunkt geheim und vor Abhörversuchen geschützt.

Die Erfindung eignet sich besonders für Kommunikationen nach dem DSRC-Standard ISO 14906, EN 15509, IEEE 1609.11 bzw. darauf aufbauenden Standards, wobei die Ableitungskennung der Key Diversifier dieses Standards ist.

Die Erfindung wird nachstehend anhand von in den beigeschlossenen Zeichnungen dargestellten Ausführungsbeispielen näher erläutert. In den Zeichnungen zeigen

die Fig. 1 und 2 ein Blockschaltbild und ein Sequenzdiagramm eines Kommunikationsverfahrens zwischen einem Fahrzeuggerät und einer Bake gemäß der früheren Anmeldung Nr. 10 450 009.5;

die Fig. 3 und 4 ein Blockschaltbild und ein Sequenzdiagramm einer ersten Ausführungsform des Authentifizierungsverfahrens der Erfindung; und

Fig. 5 ein Sequenzdiagramm einer zweiten Ausführungsform des Authentifizierungsverfahrens der Erfindung.

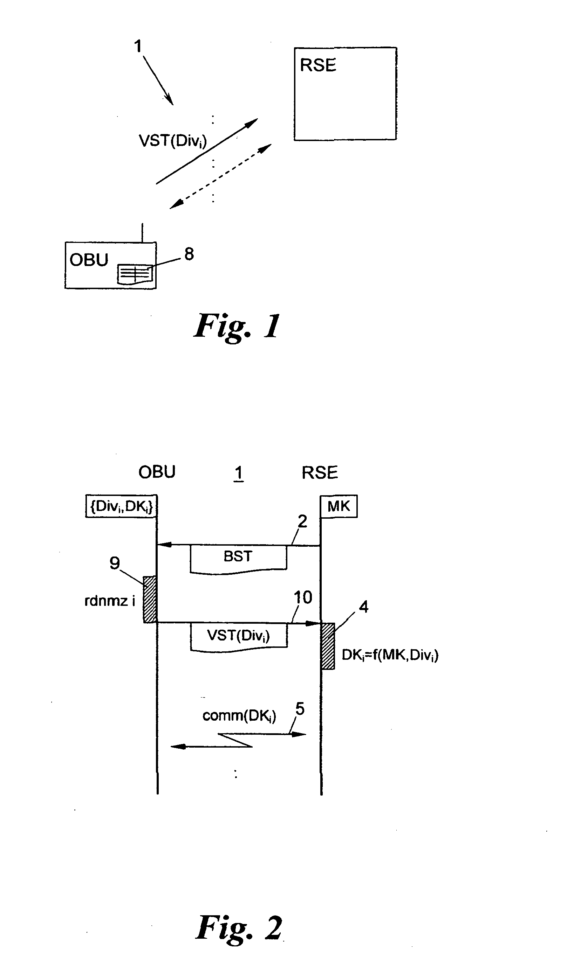

Unter Bezugnahme auf die Fig. 1 und 2 wird zunächst ein Kommunikationsverfahren gemäß der früheren Anmeldung Nr. 10 450 009.5 beschrieben, welches Grundlage des vorliegenden Authentifizierungsverfahrens ist.

Die Fig. 1 und 2 zeigen ein beispielhaftes Fahrzeuggerät (Onboard Unit) OBU und eine beispielhafte Bake (Roadside Equipment) RSE eines Straßenmautsystems, das in der Regel eine Vielzahl von Fahrzeuggeräten OBU und Baken RSE aufweist. Die Fahrzeuggeräte OBU und Baken RSE kommunizieren miteinander jeweils über eine Funkschnittstelle 1 kurzer Reichweite nach dem DSRC-Standard (Dedicated Short Range Communication), insbesondere nach dem Standard ISO 14906 oder EN 15509 oder darauf aufbauenden bzw. damit kompatiblen Standards.

Die Baken RSE verfügen jeweils über einen oder mehrere systemweite Schlüssel MK (Master Keys). Beispielsweise stehen sie mit einer (nicht dargestellten) Zentrale in Verbindung, welche den bzw. die systemweiten Schlüssel MK für die Baken RSE verwaltet oder an diese verteilt.

Aus Sicherheitsgründen wird ein systemweiter Schlüssel MK nicht in den Fahrzeuggeräten OBU gespeichert, sondern diese halten nur davon individuell abgeleitete Schlüssel DK (Derived Keys). Die individuellen Schlüssel DK können zur Verschlüsselung der Kommunikation auf der Funkschnittstelle 1 (als "Encryption Keys") und/oder als Zugriffsberechtigung ("Access Credential Keys") für den Zugriff auf im Fahrzeuggerät OBU gespeicherte Daten verwendet werden, wie dem Fachmann bekannt.

Die individuellen Schlüssel DK werden nach einer vorgegebenen Ableitungsregel vom systemweiten Schlüssel MK abgeleitet, wobei eine Ableitungskennung ("Key Diversifier") Div die jeweils fahrzeuggerätespezifisch verwendete Ableitungsregel identifiziert bzw. ein Parameter dieser Ableitungsregel ist, d.h.

$$DK = f(MK, Div).$$

Nur in Kenntnis der Ableitungskennung Div kann aus einem systemweiten Schlüssel MK der individuelle Schlüssel DK gebildet werden.

Das Fahrzeuggerät OBU enthält einen Vorrat (Pool) 8 von Paaren von verschiedenen Ableitungskennungen $Div_i$ und zugehörigen individuellen Schlüsseln $DK_i$. Der Vorrat 8 kann z.B. bei der Initialisierung oder Ausgabe eines Fahrzeuggeräts OBU in einer Programmierstation (OBU Programming Station, OPS) aus der systemweiten Kennung MK vorberechnet und in das Fahrzeuggerät OBU eingespeichert werden.

Im Rahmen einer Kommunikation zwischen Fahrzeuggerät und Bake sendet die Bake RSE in einem ersten Schritt 2 ihre Diensteübersicht (Beacon Service Table, BST) an ein vorbeifahrendes Fahrzeuggerät OBU. Nach der Aufforderung BST durch die Bake RSE wählt das Fahrzeuggerät OBU nun in einem Schritt 9 ("randomize i") zufällig (oder pseudo-zufällig) ein Paar ($Div_i$, DKi) aus seinem Vorrat 8 aus und sendet die Ableitungskennung $Div_i$ des ausgewählten Paars in der Antwort VST an die Bake RSE (Schritt 10). Alternativ könnte das Paar ($Div_i$, DKi) auch nach bestimmten Regeln aus der Liste von Paaren im Vorrat 8 ausgewählt werden, z.B. das jeweils älteste bzw. am weitesten zurückliegend verwendete Paar zuerst.

Die Bake RSE kann nun auf Grundlage der Ableitungskennung $Div_i$ den individuellen Schlüssel $DK_i$ des jeweiligen Fahrzeuggeräts OBU aus dem systemweiten Schlüssel MK ableiten (Schritt 4) und für die weitere Kommunikation, z.B. als Encryption Key oder Access Credential Key, verwenden (Schritt 5).

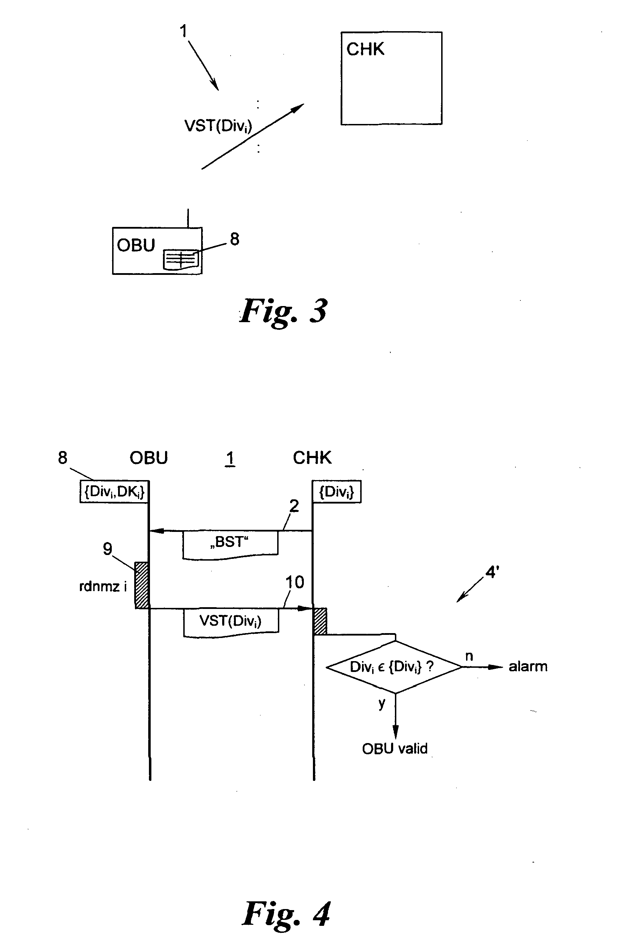

Die Fig. 3 und 4 zeigen ein auf dem Kommunikationsverfahren der Fig. 1 und 2 aufbauendes Authentifizierungsverfahren zur Überprüfung der Echtheit (Authentizität) eines Fahrzeuggeräts OBU. Dazu wird ein Abfragegerät CHK eingesetzt, welches zumindest einige (oder auch alle) Funktionalitäten der Bake RSE der Fig. 1 und 2 implementiert bzw. emuliert, und zwar jedenfalls jenen Teil der Funkkommunikation auf der Funkschnittstelle 1, welcher das Fahrzeuggerät OBU dazu bringt, eine seiner Ableitungskennungen $Div_i$ auszusenden, nun jedoch nicht an die Bake RSE, sondern an das Abfragegerät CHK. Demgemäß bezeichnen in den Fig. 3 und 4 gleiche Bezugszeichen gleiche Komponenten wie in den Fig. 1 und 2 und es wird dazu auf deren Beschreibung verwiesen.

In dem Abfragegerät CHK wird derselbe Vorrat 8 von Paaren $\{Div_i, DKi\}$ gespeichert wie in dem Fahrzeuggerät OBU, wobei es im einfachsten Fall auch genügen würde, nur die Ableitungskennungen $Div_i$ des Vorrats 8 im Abfragegerät CHK zu speichern.

Nachdem nun das Fahrzeuggerät OBU - nach entsprechender Aufforderung durch das Abfragegerät CHK im Schritt 2 - wie zuvor anhand der Fig. 1 und 2 beschrieben eine zufällige Ableitungskennung $Div_i$ aus seinem Vorrat 8 ausgesandt hat (Schritte 9, 10), kann nun in einem Schritt 4' die empfangene Ableitungskennung $Div_i$ mit den Ableitungskennungen $Div_i$ aus dem im Abfragegerät CHK gespeicherten Vorrat verglichen werden, d.h. es wird überprüft, ob die empfangene Ableitungskennung $Div_i$ in diesem Vorrat enthalten ist:

$$Div_i \in \{Div_i\} ?.$$

Wenn ja (Gleichheitsfall "y"), ist damit das Fahrzeuggerät OBU validiert bzw. authentifiziert, d.h. auf Echtheit geprüft. Wenn nein (Ungleichheitsfall "n"), ist das Fahrzeuggerät OBU nicht authentifiziert (ungültig), und es kann z.B. ein Alarm ausgegeben und eine entsprechende Meldung protokolliert werden.

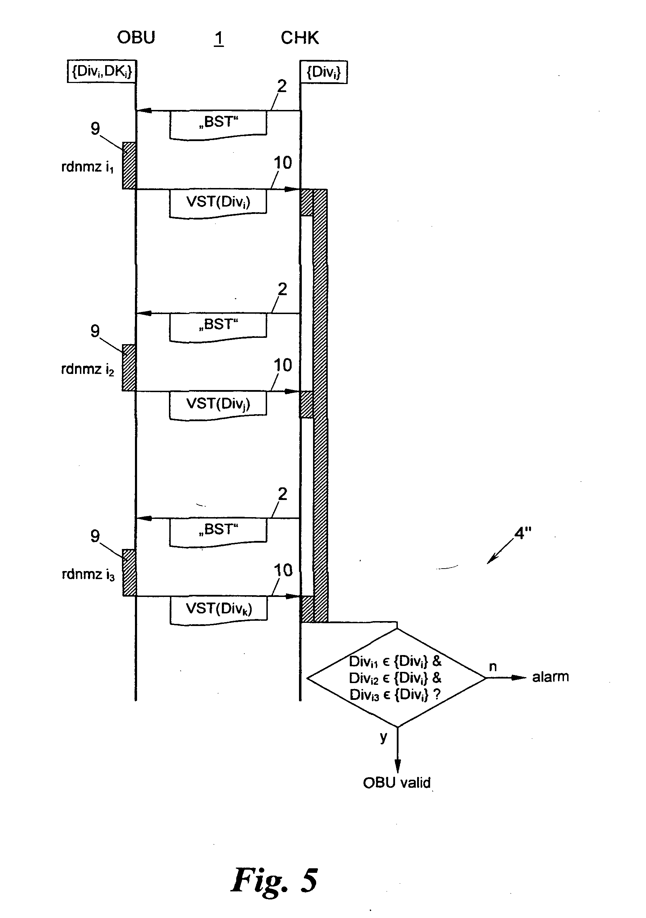

Fig. 5 zeigt eine weiterentwickelte Ausführungsform des Verfahrens der Fig. 3 und 4, bei welcher das Abfragegerät CHK mehrmals aufeinanderfolgend die genannten Kommunikationsschritte 2, 10 mit dem Fahrzeuggerät OBU durchführt, so daß dieses aufeinanderfolgend zur Absendung mehrerer wechselnder Ableitungskennungen $Div_{i1}$, $Div_{i1}$, $Div_{i3}$ usw. veranlaßt wird. Im Vergleichsschritt 4" werden alle empfangenen Ableitungskennungen $Div_{i1}$, $Div_{i2}$, $Div_{i3}$ usw. mit dem Vorrat an im Abfragegerät CHK gespeicherten Ableitungskennungen $\{Div_i\}$ verglichen und nur dann, wenn alle diese empfangenen Ableitungskennungen im Vorrat enthalten sind ("y"), wird das Fahrzeuggerät OBU für gültig erklärt bzw. authentifiziert.

Eine Option, die bei jedem der beschriebenen Verfahren angewandt werden kann, besteht darin, für Kommunikationen mit Kontrollgeräten CHK nur eine Teilmenge des Vorrats 8 im Fahrzeuggerät OBU zu verwenden, d.h. aus dem Vorrat 8 spezielle Ableitungskennung(en) $Div_i$ bzw. $Div_{i1}$, $Div_{i2}$, $Div_{i3}$ usw. nur für die genannten Authentifizierungszwecke auszuwählen. Die Ableitungskennungen dieser Teilmenge werden dann auch nicht für die Kommunikationen der Fahrzeuggeräte OBU mit den Baken RSE verwendet, so daß sie im "normalen" (Baken-)Betrieb der Fahrzeuggeräte OBU nicht nach außen dringen und nicht abgehört werden können.

Die Erfindung ist nicht auf die dargestellten Ausführungsformen beschränkt, sondern umfaßt alle Varianten und Modifikationen, die in den Rahmen der angeschlossenen Ansprüche fallen.

**Patentansprüche**

**1.** Verfahren zur Authentifizierung von Fahrzeuggeräten (OBU), die mit Baken (RSE) eines Straßenmautsystems DSRC-Kommunikationen führen können, wobei die Baken (RSE) über einen systemweiten Schlüssel (MK) und die Fahrzeuggeräte (OBU) bezüglich der Schlüssel nur über individuelle Schlüssel ($DK_i$) verfügen, die jeweils aus dem systemweiten Schlüssel (MK) anhand einer fahrzeuggerätespezifischen Ableitungskennung ($Div_i$) gebildet sind, wobei die Ableitungskennung ($Div_i$) bei einer Kommunikation vom Fahrzeuggerät (OBU) an die Bake (RSE) gesendet wird, um der Bake (RSE) die Nachbildung des individuellen Schlüssels ($DK_i$) für die Ver- bzw. Entschlüsselung der Kommunikation mit dem Fahrzeuggerät (OBU) und/oder für den Zugriff auf im Fahrzeuggerät (OBU) gespeicherte Daten zu ermöglichen, **dadurch gekennzeichnet,**
**dass** in dem Fahrzeuggerät (OBU) ein Vorrat (8) an Paaren von individuellen Schlüsseln ($DK_i$) und zugehörigen Ableitungskennungen ($Div_i$) gespeichert wird und das Fahrzeuggerät (OBU) bei aufeinanderfolgenden Kommunikationen jeweils ein anderes Paar aus dem Vorrat (8) auswählt und für die jeweilige Kommunikation verwendet, und
**dass** zur Authentifizierung das Fahrzeuggerät (OBU) von einem Abfragegerät (CHK) zur Durchführung zumindest jenes Teils (10) einer Funkkommunikation veranlasst wird, in welchem es die ausgewählte Ableitungskennung ($Div_i$) sendet, und diese im Abfragegerät (CHK) empfangen und mit im Abfragegerät (CHK) gespeicherten Ableitungskennungen ($Div_i$) des Vorrats (8) verglichen wird, wobei ein Gleichheitsfall das Fahrzeuggerät (OBU) authentifiziert.

**2.** Verfahren nach Anspruch 1, **dadurch gekennzeichnet, dass** das Fahrzeuggerät (OBU) vom Abfragegerät (CHK) zur Durchführung aufeinanderfolgender Kommunikationen (10) veranlasst wird, um mehrere verschiedene Ableitungskennungen ($Div_{i1}$, $Div_{i2}$, $Div_3$) zu empfangen und mit im Abfragegerät (CHK) gespeicherten Ableitungskennungen ($Div_i$) des Vorrats (8) zu vergleichen, wobei das Fahrzeuggerät (OBU) nur authentifiziert wird, wenn alle Vergleiche den Gleichheitsfall ergeben.

**3.** Verfahren nach Anspruch 1 oder 2, **dadurch gekennzeichnet, dass** das Paar ($Div_i$, $DK_i$) im Fahrzeuggerät (OBU) zufällig oder zumindest pseudozufällig aus dem Vorrat (8) ausgewählt wird.

**4.** Verfahren nach einem der Ansprüche 1 bis 3, **dadurch gekennzeichnet, dass** das Paar ($Div_i$, $DK_i$) im Fahrzeuggerät (OBU) aus einer Teilmenge des Vorrats (8) ausgewählt wird, welche nur bei Kommunikationen mit Kontrollgeräten (CHK) und nicht bei Kommunikationen mit Baken (RSE) verwendet wird.

**5.** Verfahren nach einem der Ansprüche 1 bis 4, **dadurch gekennzeichnet, dass** die Kommunikation nach dem DSRC-Standard ISO 14906, EN 15509, IEEE 1609.11 bzw. damit kompatiblen Standards erfolgt und die Ableitungskennung ($Div_i$) der Key Diversifier dieses Standards ist.

**Claims**

**1.** Method for authenticating onboard units (OBU), which can conduct DSRC communications with beacons (RSE) of a road toll system, wherein the beacons (RSE) have a system-wide key (MK) and the onboard units (OBU), as far as the keys are concerned, only have individual keys ($DK_i$), which are respectively formed from the system-wide key (MK) on the basis of a derivation code ($Div_i$) specific to each onboard unit, wherein upon a communication from an onboard unit (OBU) the derivation code ($Div_i$) is transmitted to the beacon (RSE) in order to enable the beacon (RSE) to emulate the individual key ($DK_i$) for en/decrypting the communication with the onboard unit (OBU) and/or for accessing data stored in the onboard unit (OBU), **characterised in that** a pool (8) of pairs of individual keys ($DK_i$) and associated derivation codes ($Div_i$) is stored in the onboard unit (OBU) and in the case of consecutive communications the onboard unit (OBU) respectively selects another pair from the pool (8) and uses it for the respective communication, and that for authentication the onboard unit (OBU) is caused by an interrogation device (CHK) to conduct at least that part (10) of a radio communication, in which it transmits the selected derivation code ($Div_i$), and this is received in the interrogation device (CHK) and compared with derivation codes ($Div_i$) of the pool (8) stored in the interrogation device (CHK), wherein the onboard unit (OBU) is authenticated when identity is established.

**2.** Method according to claim 1, **characterised in that** the onboard unit (OBU) is caused by the interrogation device (CHK) to conduct consecutive communications (10) in order to receive multiple different derivation codes ($Div_{i1}$, $Div_{i2}$, $Div_{i3}$) and compare these with derivation codes ($Div_i$) of the pool (8) stored in the interrogation device (CHK), wherein the onboard unit (OBU) is only authenticated when all comparisons establish identity.

**3.** Method according to claim 1 or 2, **characterised in that** the pair ($Div_i$, $DK_i$) is selected randomly or at least pseudo-randomly from the pool (8) in the onboard unit (OBU).

**4.** Method according to one of claims 1 to 3, **characterised in that** the pair ($Div_i$, $DK_i$) is selected in the onboard unit (OBU) from a subset of the pool (8), which is only used in the case of communications with interrogating devices (CHK) and not in communications with beacons (RSE).

**5.** Method according to one of claims 1 to 4, **characterised in that** the communication occurs in accordance with DSRC standard ISO 14906, EN 15509, IEEE 1609.11 or a standard compatible therewith and the derivation code ($Div_i$) is the key diversifier of this standard.

**Revendications**

**1.** Procédé pour l'authentification d'appareils embarqués (OBU) capables d'établir des communications DSRC avec des balises (RSE) d'un système de péage routier, dans lequel les balises (RSE) disposent d'une clé commune au système (MK) et les appareils embarqués (OBU) disposent uniquement de clés individuelles ($DK_i$) pour ce qui est des clés, lesquelles sont respectivement conçues à partir de la clé commune au système (MK), à l'aide d'un identificateur dérivé ($Div_i$) spécifique à l'appareils embarqués, dans lequel l'identificateur dérivé ($Div_i$) est envoyé de l'appareil embarqué (OBU) vers la balise (RSE) lors d'une communication, pour permettre à la balise (RSE) de reproduire la clé individuelle ($DK_i$) pour le cryptage ou le décryptage de la communication avec l'appareil embarqué (OBU) et/ou pour l'accès à des données stockées dans l'appareil embarqué (OBU), **caractérisé en ce que** une réserve (8) de paires de clés individuelles ($DK_i$) et d'identificateurs dérivés ($Div_i$) associés est stoc-

kée dans l'appareil embarqué (OBU), et l'appareil embarqué (OBU) sélectionne respectivement une paire différente à partir de la réserve (8) lors de communications successives et l'utilise pour la communication respective, et

**en ce que** pour l'authentification, un dispositif d'interrogation (CHK) amène l'appareil embarqué (OBU) à exécuter au moins la partie (10) d'une communication radio dans laquelle il envoie l'identificateur dérivé ($Div_i$) sélectionné, et celui-ci est reçu dans le dispositif d'interrogation (CHK) et comparé avec des identificateurs dérivés ($Div_i$) de la réserve (8) stockés dans le dispositif d'interrogation (CHK), un cas d'égalité permettant d'authentifier l'appareil embarqué (OBU).

2.  Procédé selon la revendication 1, **caractérisé en ce que** le dispositif d'interrogation (CHK) amène l'appareil embarqué (OBU) à exécuter des communications successives (10), pour recevoir plusieurs identificateurs dérivés ($Div_{i1}$, $Div_{i2}$, $Div_{i3}$) différents et les comparer avec des identificateurs dérivés ($Div_i$) de la réserve (8) stockés dans le dispositif d'interrogation (CHK), l'appareil embarqué (OBU) n'étant authentifié que si toutes les comparaisons indiquent le cas d'égalité.

3.  Procédé selon la revendication 1 ou 2, **caractérisé en ce que** la paire ($Div_i$, $DK_i$) est sélectionnée de façon aléatoire ou au moins de façon pseudo-aléatoire dans l'appareil embarqué (OBU) à partir de la réserve (8).

4.  Procédé selon l'une des revendications 1 à 3, **caractérisé en ce que** la paire ($Div_i$, $DK_i$) est sélectionnée dans l'appareil embarqué (OBU) à partir d'un sous-ensemble de la réserve (8), lequel est utilisé uniquement lors de communications avec des dispositifs de contrôle (CHK) et non pas lors de communications avec des balise (RSE).

5.  Procédé selon l'une des revendications 1 à 4, **caractérisé en ce que** la communication est réalisée selon la norme DSRC ISO 14906, EN 15509, IEEE 1609.11 ou des normes compatibles avec celles-ci, et l'identificateur dérivé ($Div_i$) est le Key Diversifier de cette norme.

*Fig. 1*

*Fig. 2*

**Fig. 3**

**Fig. 4**

OBU     **1**     CHK

$\{Div_i, DK_i\}$        $\{Div_i\}$

2

„BST"

9

rdnmz $i_1$

10

VST($Div_i$)

2

„BST"

9

rdnmz $i_2$

10

VST($Div_j$)

2

„BST"

9

rdnmz $i_3$

10

VST($Div_k$)

4"

$Div_{i1} \in \{Div_i\}$ &
$Div_{i2} \in \{Div_i\}$ &
$Div_{i3} \in \{Div_i\}$ ?

n → alarm

y

OBU valid

*Fig. 5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 10450009 A

- WO 10450009 A